# EUROPEAN PATENT APPLICATION

(11) **EP 0 926 894 A1**
(43) Date of publication of application: **30.06.1999**
(21) Application number: 97403150.2
(22) Date of filing: 23.12.1997
(51) Int. Cl.: H04N 7/167

(54) **Scrambling unit for a digital transmission system**

(71) Applicant: CANAL+ Société Anonyme, 75711 Paris Cedex 15 (FR)
(72) Inventor: Tranchard, Lionel, 75013 Paris (FR); Declerck, Christophe, 28210 Senantes (FR)
(74) Representative: Cozens, Paul Dennis

(57) **Abstract**

An independant scrambling unit 1 for a digital audiovisual transmission system, the scrambling unit 1 comprising an input for receiving an assembled transport packet stream from a physically separate multiplexer 4, a scrambling device for scrambling the received transport stream according to a randomising control word and an output for sending the scrambled transport stream to a transmitter means for subsequent transmission. The scrambling unit 1 may also be used to introduce other packet data in the data stream.

## Description

The present invention relates to a scrambling unit for a digital audiovisual transmission system, in particular for a digital television transmission system, together with a scrambling system including such a scrambling unit.

Transmission of scrambled or encrypted data is well-known in the field of digital pay TV systems, where scrambled audiovisual information is broadcast to a number of subscribers, each subscriber possessing a decoder or receiver/decoder capable of descrambling the transmitted program for subsequent viewing.

Scrambling of the data is usually carried out by the multiplexing device also responsible for assembling the transmitted transport stream of data. The multiplexer receives digital video, audio or other digital data and assembles a single transport packet stream. Each packet in the transport stream is usually of a predetermined length and contains a header and a payload.

The packet header includes a packet ID or PID identifying the packet and corresponding to the type of data (video, audio etc) within the packet. The payload of the packet contains the audio, video or any other data such as application data processed by the receiver/decoder to provide extra functions, for example to generate a program guide etc.

Conventionally, the payload data is scrambled by a rapidly changing random control word generated by the multiplexer. This control word is then sent to the receiver/decoder within an ECM, or Entitlement Control Message inserted in the transport packet stream in conjunction with the scrambled data. The ECM contains other information such as access rights and is itself encrypted by an appropriate encryption key before transmission.

The encrypted ECM is usually prepared by a separate access control system, proprietary to a particular channel or service provider. The access control system receives from the multiplexer the scrambling control word, inserts the control word in an ECM, encrypts the whole ECM with the current encryption key and sends the encrypted ECM back to the multiplexer. The multiplexer then inserts the encrypted ECM in the transport stream together with the scrambled data.

The scrambled data and encrypted ECM are transmitted to a receiver/decoder having access to an equivalent of the encryption key so as to decrypt the ECM and thus obtain the control word to descramble the transmitted data. The exploitation key changes regularly and a decoder belonging to a paid-up subscriber will typically receive in a monthly EMM (Entitlement Management Message) the exploitation key necessary to decrypt the encrypted ECM for that month.

The advantage of scrambling the data with a control word generated by the multiplexer is that the system can be expanded to simultaneously scramble data for a number of access control systems in parallel. This may be necessary, for example, where the content provider is broadcasting to a mixed park of decoders, of different ages, characteristics etc. Each access control system receives the control word used at that moment by the multiplexer and, thereafter, generates its own proprietary ECM, which is sent to the multiplexer for incorporation in the transport packet stream. Such "simulcrypt" systems use the same control word to scramble all data.

Whilst systems of this sort are relatively simple in terms of implementation, the management of communications between the multiplexer and the access control systems may be difficult to implement. Furthermore, the level of security is often limited by the complexity of the algorithm used by the multiplexer to generate the scrambling control word.

It is an object of the present invention in its various aspects and embodiments to overcome some or all of the problems of the prior art systems.

According to the present invention there is provided a scrambling unit for a digital audiovisual transmission system, the scrambling unit comprising an input for receiving an assembled transport packet stream from a physically separate multiplexer, a scrambling device for scrambling the received transport stream according to a randomising control word and an output for sending the scrambled transport stream to a transmitter means for subsequent transmission so as to permit the scrambling of the transport packet stream by the scrambling unit independently of the multiplexer operations.

Unlike prior art systems, in which the scrambling of the data is carried out by the multiplexer at the same time as it multiplexes together the various data streams to form the single transport stream, the present invention proposes an entirely different solution in which a discrete scrambler unit receives via a dedicated input the already assembled transport stream.

This solution facilitates the management of communications between each of the elements of the system through the division of functionality between separated scrambling and multiplexing parts of ,the system. Furthermore, since the scrambling unit is not constrained by the usual limitations of multiplexer scrambler devices, the level of complexity of the scrambling algorithm can be increased.

The scrambling device may be adapted to carry out scrambling on some or all of the payload of selected packets of the transport stream packet. In a high "transport stream" scrambling level, all of the payload of a given transport stream packet may be scrambled, for example. Alternatively, only part of the payload of a packet may be scrambled.

In addition to the scrambling device, the scrambling unit may also comprise a packet insertion means for inserting transport packet data in the transport stream. For example, the scrambling unit may be used to introduce packets containing the scrambling control word within encrypted ECM messages. Other types of data may equally be inserted in the transport stream to make full use of available bandwidth, irrespective of the limitations of the multiplexer downstream of the unit.

In one embodiment, the packet insertion means may act to insert a packet of data in the transport stream by detecting the presence of a null packet and replacing this packet by the packet to be inserted. A null packet is a packet generated during the operating cycle of the multiplexer that contains no data. It is conventionally identified by a characteristic PID value.

The scrambling unit may further comprise a packet filter means for identifying and copying to a memory part or all of a predetermined transport packet. For example, the filter may be pre-programmed to identify certain transport packets by their PID value that contain data to be modified by the scrambler, such as user specific tables or the like. Filtering may equally be carried out on part of a packet, e.g. by looking at the table ID within the payload of the transport packet etc.

Advantageously, the scrambling unit may also comprise a packet deletion means for deleting a predetermined packet, for example, transforming the packet ID of the packet to that of a null packet. For example, where the packet is to be filtered by its PID value and replaced by a modified packet with the same PID value, it will be necessary to delete the original packet with this PID to avoid generation of multiple packets with the same PID. The packet to be deleted will then become a null packet, which will thereafter be ignored or replaced another packet introduced by the packet insertion means.

Preferably, the scrambling unit also comprises a packet counting means for counting the number of packets of a predetermined packet ID value in the received transport data stream. For example, the packet counting means may be used to count the number of null packets in the data stream to enable evaluation of the space available in the transport stream to insert ECM packets etc.

Preferably, the scrambling unit also comprises a packet ID re-mapping means for changing the packet ID value assigned to a predetermined packet or set of packets. This may be used to remove the risk of any conflict between the PID value of an inserted packet and that of a packet already present in the transport stream.

The scrambling unit described above may operate in a stand alone mode. Alternatively, the unit may form part of a scrambling system, the system further comprising a central control means for generating a control word sent to and received by the scrambling unit for scrambling the transport stream. The central control means may be implemented by a single PC, or a PC acting as a central control station in combination with a second PC and smart card for generating the control word.

Preferably, the scrambling system further comprises one or more access control systems connected to the central control means and adapted to receive a control word supplied by the central control means and to send back to the central control means an encrypted message e.g. an ECM message containing the control word.

In this manner the central control means can coordinate generation of an ECM based on the same control word by a plurality of access control systems, in accordance with the "simulcrypt" principle, and transmit the ECMs and their associated control word to the scrambler, for synchronised insertion of the ECMs in the transport stream and scrambling of the transport data in accordance with the control word.

Preferably, some or all of the data sent from the central control means to the scrambling unit is authenticated by the central control means by generation of a signature in accordance with a secret encryption key. In the case where a public/private encryption arrangement is used, the scrambling unit possesses an equivalent public key permitting the scrambler to verify the origin of the data. In particular, all control word data sent to the scrambler should be authenticated, to avoid the possibility of falsification of the control word by breach of the connection between the two.

Further security measures may also be introduced, e.g. by encrypting all transmitted data in accordance with a symmetric algorithm, the central control means and scrambling unit each possessing the necessary keys for encryption and decryption of messages.

The embodiment of the scrambling system above has been described in relation to a single scrambling unit, a single central control means etc. However, for reasons of reliability it may be desired to have at least one stand-by or back up for each of the elements of the system and, in a preferred embodiment, the system comprises a plurality of scrambling units and associated central control means associated with the generation of the transport stream. In this way, the system may switch between control means and scrambling units in the event of failure or erroneous operation of the relevant part of the system.

In the context of the present application the term 〈〈digital audiovisual transmission system〉〉 refers to all transmission systems for transmitting or broadcasting primarily audiovisual or multimedia digital data. Whilst the present invention is particularly applicable to a broadcast digital television system, the present invention may equally be used in filtering data sent by a fixed telecommunications network for multimedia internet applications etc.

The term MPEG refers to the data transmission standards developed by the International Standards Organisation working group "Motion Pictures Expert Group" and notably the MPEG-2 standard developed for digital television applications and set out in the documents ISO 13818-1, ISO 13818-2, ISO 13818-3, and ISO 13818-4. In the context of the present patent application, the term includes all variants, modifications or developments of the basic MPEG formats applicable to the field of digital data transmission.

There will now be described, by way of example only, a number of embodiments of the present invention, with reference to the attached figures, in which:
Figure 1 shows the elements of a scrambling system of an embodiment of the invention;
Figure 2 shows in detail the scrambling unit of Figure 1; and
Figure 3 shows a further embodiment of the present invention.

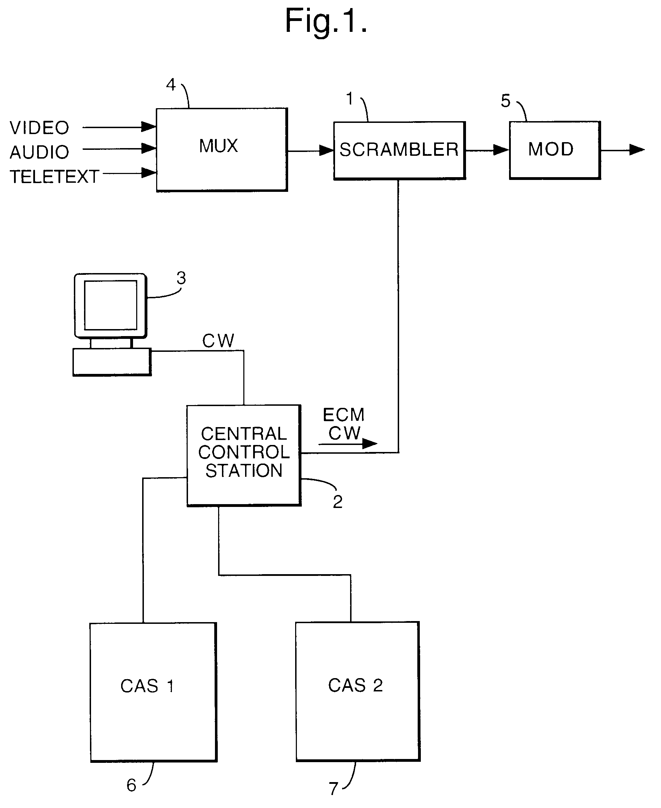

Referring now to Figure 1, there is shown a scrambling system for digital television system comprising a scrambling unit 1 and a central control means defined by a central control station 2 and a control word generator 3. The control word generator 3 may be, as shown, a PC type computer including a smart card reader adapted to receive a smart card containing an encryption key for signing data (see below). Alternatively, the control word generator may be a rack type unit, an add-on card to be inserted in the control station 2 etc.

The scrambling unit 1 receives at its input unscrambled transport packets from a multiplexer 4 and passes a scrambled transport stream to a modulator 5 for preparation prior to transmission via a suitable satellite transmission link or the like.

The multiplexer 4 may be any conventional multiplexer conforming to the MPEG standard and capable of receiving digital video, audio, teletext etc information and producing a non-encrypted transport packet stream from this data. In a conventional MPEG broadcast system, video, audio etc data may be supplied to the multiplexer in the form of a packetised elementary stream (PES). Other packet data may equally be multiplexed into the transport stream.

The output of the multiplexer comprises a sequence of transport packets comprising a header and a payload containing the PES or other data. Depending on the data supplied to the multiplexer and the efficiency of the multiplexer, the packet stream may also comprise a greater or smaller number of so-called null packets containing no data.

Other types of data in the data stream provided to the multiplexer may be divided up in sections. In addition or alternatively, data may also be provided to the multiplexer in the form of a number of tables or modules, the tables being downloaded and assembled by the receiver/decoder at the other end of the transmission system to form the complete application. In a similar manner to the packets in the transport packet stream, the tables may be identified by means of a table ID or TID value.

In the data stream, packets of data are identified by their packet ID or PID, video data having one PID value, audio data another etc. In the MPEG standard, null packets of data have the predetermined PID value of 0x1FFF. By way of contrast, the PID value assigned to a given type of data (audio, video etc) may be determined by the content provider. For further details regarding the packet structure of an MPEG transport stream, the form of PES and sectioned and tabulated data, the reader is referred to the international standard documents ISO 13818-1, ISO 13818-2, ISO 13818-3, and ISO 13818-4. These standards also set out the characteristics of the physical interface layer necessary to ensure compatibility between MPEG devices, notably the use of an Asynchronous Serial Interface (ASI) etc.

The modulator 5 may be of any conventional type necessary to convert the digital transport packet stream into a form suitable for transmission via a telecommunications link such as a satellite, cable, network link etc.

The scrambling unit 1 is additionally connected to receive ECM and control word data from the central control station 2, which is in turn connected to the control word generator 3 and one or more conditional access systems 6, 7. The control word generator 3 comprises a PC type computer capable of generating a randomised control word stream and including a card reader for reading a smart card containing a private key for signing the random control word data thus generated.

The central control station 2 may also comprise a PC or the like and, indeed, may even be integrated with the control word generator 3. In accordance with the principles of a "simulcrypt" system, the same control word is used to encrypt the transmissions for a number of access control systems. Each access control system encrypts the control word and other data with its own encryption key in order to prepare an ECM message for broadcast to subscribers using this access control system.

The central control station 2 is therefore configured to pass the control word data via a suitable communications link to the access systems 6, 7 which prepare encrypted ECM messages which are sent back to the central control station 2. The central control station 2 then sends the ECM messages (in the form of one or more transport packets) and associated control word data via, for example, a TCP/IP link to the scrambling unit 1.

In order to avoid the possibility of the communication link being compromised and the control word data being substituted by other data originating outside of the system, the control word data is signed at the moment of generation by a private key held on the smart card associated with the generator 3, as described above. The scrambling unit 1 possesses an equivalent public key that may be used to authenticate the signed data, in accordance with known private/public key authentication methods. In the event that the control word data is not correctly authenticated, the scrambling unit may refuse to carry out scrambling of the transport packet stream.

Further encryption of communications passed between the control station 2 and scrambling unit 1 may also be carried out, for example, through the use of a symmetric encryption scheme and a pair of private-keys held by the central control means and scrambling unit.

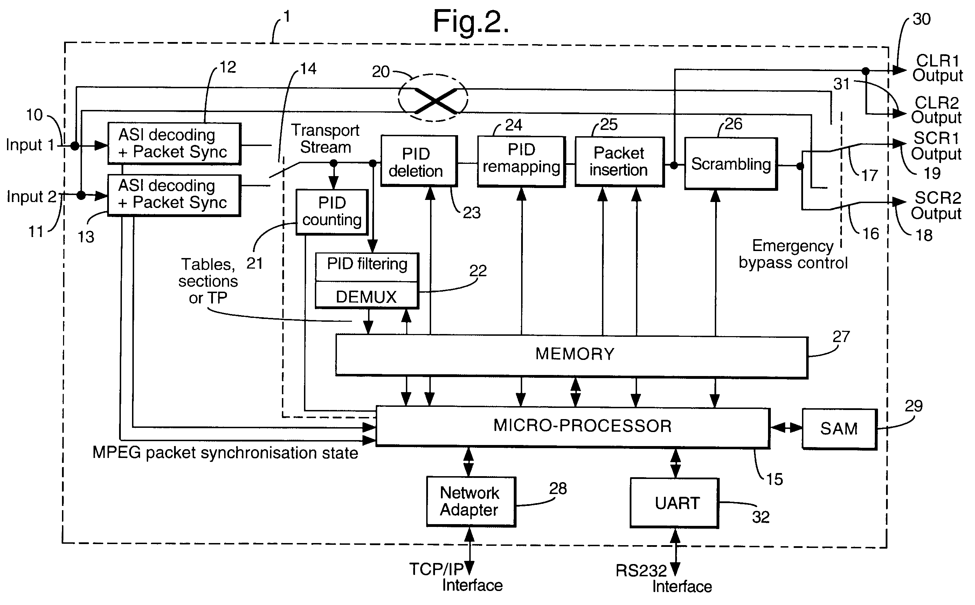

Referring now to Figure 2, the structure of the scrambling unit of Figure 1 will now be described in detail. As will be understood, some of the elements shown here represent functional blocks within the decoder that may be implemented in either hardware or software form or in a combination thereof.

The unit 1 receives via inputs 10, 11 the non-encrypted transport stream output from the multiplexer. In order to provide a degree of security against problems in the link between the multiplexer and the scrambling unit, a double connection is provided, as shown, with the same transport stream being received at each of the inputs 10, 11. The connection may also be used to manage redundancy of data streams originating from different multiplexer sources.

Information regarding the synchronisation and timing of the packets in the MPEG packet stream is provided to a central microprocessor 15 by the decoder and synchronisation elements 12, 13. The decoder and synchronisation elements detect that the data corresponds to an MPEG stream at a physical level (correct ASI characteristics etc). The synchronisation element recovers the MPEG synchronisation byte to ensure subsequent synchronous processing of the data. These elements are conventional and are found, for example, in MPEG receiver/decoder units as an element of the decryption link.

In the event of any fault in the stream received via one of the inputs, the microprocessor controls a switching element 14 to change to the stream received via the other input. As will be seen, given the necessity to maintain a continuous flow of transmitted data, this sort of redundancy may be repeated at other levels in the scrambling system.

As will be described, the transport stream output via the outputs 18, 19 is normally scrambled. However, in order to provide an unscrambled and unaltered output from the unit, either for testing purposes or to bypass the scrambling circuitry in the event of a fault, the unit further includes emergency bypass switches 16, 17 manually operable and which enable the transport packet stream (received via either or both inputs) to be directly passed through the unit.

As shown by the cross-connection 20, the input/output link in the bypass mode may be switched such that the stream received via the input 10 emerges via the output 18, whilst that received via input 11 emerges via the output 19. Alternatively, by changing the configuration of the connection 20, input 10 may be connected to output 19 and input 11 to output 18. The cross-section 20 may be implemented, for example, by external leads plugged into the unit, the configuration of which may be changed as desired. This cross-connection again enables verification of the individual communication channels to be more easily effected.

The advantage of such an implementation is that the bypass is completely passive such that the signal can pass through the unit, even in the case of a power failure. If activated by a relay, the bypass can be automatically activated when a power failure occurs.

The functioning of the elements of the PID counter 21, PID filter 22, PID deletion unit 23, PID re-mapping unit 24, packet insertion unit 25 and scrambler 26 will now be described. As will become clear, some of these elements such as the PID filter 22 and PID counter 21 are known in the context of a receiver/decoder where they are used in the demultiplexing and descrambling operations carried out on a received transport stream.

Similarly, the elements such as the scrambler 26, packet insertion unit 25, PID re-mapping unit 24 and PID deletion unit 23 are known in the context of a conventional combined multiplexer/scrambling device. Whilst there will therefore be no difficulty for one skilled in the art to assemble and construct these elements, it will nevertheless be appreciated that the specific combination and juxtaposition of such elements in the context of an external unit as described is nevertheless entirely original.

The PID counter 21, programmable by the microprocessor 15 may be used to verify the presence or absence of packets with a predetermined PID value in the transport packet stream as well as to count the number of packets bearing this PID value that are present in a given block of transport packets. In particular, the PID counter 21 may be used to count the number of null packets present in the transport stream (MPEG PID value: 0x1FFF) so as to evaluate the bit rate available for insertion of further-packets (see below). Alternatively, the counter 21 may be used to detect the presence of a packet such as a private data packet or the like which is to be modified or deleted by the unit.

In order to more fully analyse the data stream, a PID filter and demux unit 22 is used to filter out packet sequences of a given PID value and to copy these packets to the memory 27. The filter unit 22 may also be used to carry out filtering at a lower level in the transport packet stream, for example, a filtering of sections and/or tables of data within the payload of a transport packet. As in conventional filter units used in a receiver/decoder, the filter 22 may be programmed to recognise table ID values, table ID extension values, section data etc.

The configuration of the filter 22 is set by the microprocessor 15, which is in turn connected via a network adapter 28 and a TCP/IP link to the central control station shown in Figure 2. The central control station can therefore choose which packets to filter out of the data stream.

An accessed or filtered packet in the data stream is copied by the filter 22 into the memory 27 associated with the microprocessor 15. The packet stored in the memory may then be transmitted via the TCP/IP link to the central control station for further analysis or modification. The central control station may decide, for example, to filter out certain private data packets of a given PID value for modification or may require modification of the packets used to describe the contents of the transport stream in the event that entirely new packets with a new PID value are to be inserted in the transport stream.

As will be understood, the fact that a given packet has been filtered and copied into the memory does not mean that the packet has been physically removed from the transport stream. Accordingly, in the event that packets of a given PID value are to be inserted in the transport stream, it will be necessary to delete the present packets having this value to avoid collision. In order to do this, the packet deletion unit is adapted to transform packets of a given PID value to null packets, by, inter alia, changing the PID value of the packets to the PID value of a null packet. Specifically, in the case of an MPEG standard packet, the following changes shall be carried out on the packet header:
PID value forced to 0x1FFF
Transport_scrambling_control forced to 00
Adaptation_field_control forced to 01
Payload_unit_start_indicator forced to 0

As will be understood, null packets in the transport stream are not read since they supposedly contain no payload and the packets thus transformed are for all intents and purposes deleted. Furthermore, as will be described, the packet insertion unit 25 is in fact adapted to detect and replace any null packets by packets held in the memory for insertion in the transport stream.

In addition and in the same way that the deletion unit 23 deleted certain PID packets to null packets by changing their PID value, a PID re-mapping unit may be provided to change any given PID to a new PID value. This may be required to circumvent limitations of the original multiplexer that supplies the multiplexed transport stream to the scrambling unit and/or to avoid PID conflicts with new packets to be inserted into the transport stream. For example, the unit may be configured as follows:

| Incoming PID value | Re-mapped PID value |
|---|---|
| 0x20 | 0x0100 |
| 0x21 | 0x0101 |
| 0x22 | 0x0200 |
| 0x23 | 0x0201 |

Only the PID field in the transport packet header is modified. Transport packets not designated by these PID values remain unchanged. As with the deletion unit, the configuration of the PID re-mapping unit is in practice determined by the central control station. In the event that the packet insertion unit 25 has been programmed to insert packets of a PID value not present in the original transport stream, re-mapping of the PID values may not be necessary. In contrast, in the event that a potential conflict has been detected, the PID re-mapping unit will re-map the conflicting PID value in the original transport stream to a new value.

Turning now to the packet insertion unit 25, this unit is adapted to insert a transport packet held in the memory 27 to replace any null packet present in the transport stream. No change or management of the PID values of the inserted packets is effected by the unit 25. As mentioned above, potential PID conflicts are handled by the PID re-mapping unit 24 and the PID deletion unit 23.

Packets may be inserted in the transport stream in a number of different ways:
1. Cyclic data insertion. This may be used, for example, to introduce static tables of data. In this case, the packets are stored in a queue in the memory 27, a scheduler reading each of the queues at regular intervals to introduce the packet data in a cyclic fashion into the stream, a packet being introduced at each occurrence of a null packet. The scheduler handles the continuity counter (ie the sequential number of the packet) within the packet sequence to ensure the correct numbering of the transmitted sequence.
2. ECM synchronised insertion. In this case, ECM messages are received from the control station together with the associated control word data. The ECM messages are inserted as cyclic data, synchronised with the scrambling operation carried out by the scrambler 26 using the control word data.
3. One shot data insertion. In this case, a packet sequence is inserted one time only in the transport stream. The sequence is stored in a FIFO queue in the memory, the next packet in the queue being inserted at the occurrence of the next null packet. In this case, the continuity counter of the packets in the sequence may be pre-set before being received by the scrambling unit. One shot data insertion may be used to insert data received from the control station 2, or from other sources, such as EMM generators.

Packets or sequences of packets sent from the central control station 2 to the scrambling unit 1 in any of these operations may be identified with an associated identity value, such that the central control station can override or call-back the insertion of a packet or sequence of packets in the transport stream.

The transport packet stream, modified and including the desired ECM messages is then passed to the scrambler 26. The scrambler 26 may conform to a digital scrambler as used in any conventional multiplexer/scrambler device. In order to carry out scrambling of the transported data (but not of the ECM messages) the scrambler is provided with the necessary PID information to prepare groups of packets having PID values indicating that they are to be scrambled.

Scrambling may be carried out at a transport stream level, i.e. on the whole of the payload of a transport packet, or (e.g. for audio/visual type data) at a PES stream level, i.e. on the payload of the PES packets contained within the transport packets. Either type of scrambling may be desired according to the requirements of the service provider.

The scrambler carries out scrambling of the data according to the control word provided by the central control station 1. As described above, the control word data is signed at the central control station by a private key and the control word and signature sent to the unit 1. The unit 1 includes a smart card reader adapted to read a smart card 29 containing the equivalent public key. At the same time as the control word is passed to the scrambler 26, the microprocessor 15 verifies the signature using the public key, as shown. In the event that there is a failure in the authentication process, the scrambler 26 may be instructed to terminate the scrambling process or to ignore the control word that has been received.

As mentioned above, communications between the central control station and the scrambling unit may be further encrypted by means of a symmetric algorithm and, in this case, the smart card 29 may also contain the key necessary to decrypt communicated data before the authentication step.

In addition, in the case where the scrambling unit is adapted to receive data sent from other sources independent of the central control station (e.g. an EMM source), the network used to send messages from the central control station to the scrambling unit may be physically separate from the network used to receive messages received from other sources. In this case, the network adapter 28 will include two separate network interfaces, the interface for receiving data from other sources being "read-only" to prevent the unit being re-programmed by sources external of the scrambling system.

As shown, the scrambling unit 1 further includes outputs 30, 31 to enable a clear transport stream output to be read from the unit. Unlike the output obtained by the bypass switches 16, 17, the outputs 30, 31 represent the transport stream after modification by insertion/deletion of packets etc, but before scrambling is carried out. These outputs can be used for surveillance of the operation of the unit and monitoring of the result of the operations in clear. In addition, the unit may include a standard RS232 interface 32 to enable interrogation of the microprocessor for test purposes.

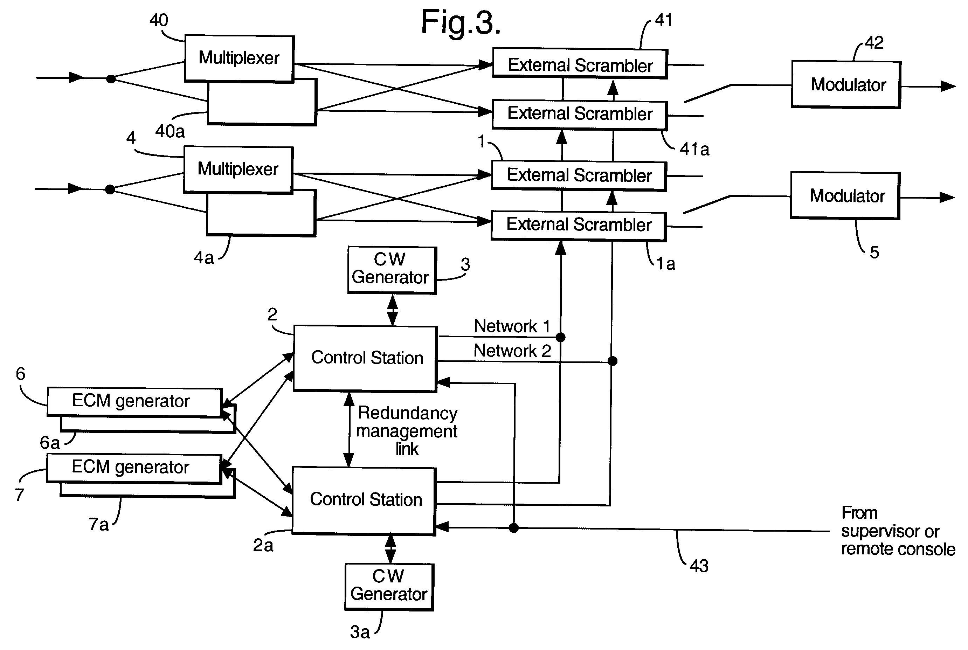

Figure 3 shows a further embodiment of the present invention, in which a number of the elements of the system of Figure 1 have been duplicated in order to provide a degree of security through redundance of the elements. In particular, a standby central control unit 2a and control word generator 3a together with a standby scrambling unit 1a have been indicated.

The parts of the access control systems concerned with generation of an ECM have also been duplicated and this has been indicated by the reference numbers 6a, 7a. Audio, video etc signals may also be passed by a standby multiplexer 4a. Furthermore, a second transmission channel for generation of an MPEG transport channel may also be handled by the present system. This has been indicated by the multiplexer 40 (and its standby 40a), scrambling unit 41 (and its standby 41a) and modulator 42.

The redundancy of the various elements in the system may be managed by a communication link between the control stations 2, 2a and/or a link to a supervisor or remote terminal indicated by the line 43. In particular, a "heartbeat" signal may be provided from the station 2 to the station 2a, the control station 2a acting to take control of the generation of ECM messages and control word data in the event of any interruption of this signal. Similarly, the scrambler units 1, 1a may be slaved to the control stations to enable transfer of functions between the two in the event of failure of one or the other scrambling unit.

## Claims

1. A scrambling unit for a digital audiovisual transmission system, the scrambling unit comprising an input for receiving an assembled transport packet stream from a physically separate multiplexer, a scrambling device for scrambling the received transport stream according to a randomising control word and an output for sending the scrambled transport stream to a transmitter means for subsequent transmission, so as to permit the scrambling of the transport packet stream by the scrambling unit independently of the multiplexer operations.

2. A scrambling unit as claimed in claim 1 in which the scrambling device is adapted to carry out scrambling on some or all of the payload of selected packets of the transport stream packet.

3. A scrambling unit as claimed in claim 1 or 2 further comprising a packet insertion means for inserting transport packet data in the transport stream.

4. A scrambling unit as claimed in claim 3 in which the packet insertion means inserts a packet of data in the transport stream by detecting the presence of a null packet and replacing a null packet by the packet to be inserted.

5. A scrambling unit as claimed in any preceding claim further comprising packet filter means for identifying and copying to a memory part or all of a predetermined transport packet.

6. A scrambling unit as claimed in any preceding claim further comprising packet deletion means for deleting a predetermined packet or set of packets.

7. A scrambling unit as claimed in claim 6 wherein the packet deletion means deletes a packet by transforming the packet ID of the packet to that of a null packet.

8. A scrambling unit as claimed in any preceding claim further comprising packet counting means for counting the number of packets of a predetermined packet ID value in the received transport data stream.

9. A scrambling unit as claimed in any preceding claim further comprising packet ID re-mapping means for changing the packet ID value assigned to a predetermined packet or set of packets.

10. A scrambling system comprising a scrambling unit as claimed in any preceding claim together with central control means for generating a control word sent to and received by the scrambling unit for scrambling the transport stream.

11. A scrambling system as claimed in claim 10 further comprising one or more access control systems connected to the central control means and adapted to receive a control word supplied by the central control means and to send back to the central control means an encrypted message containing the control word.

12. A scrambling system as claimed in claim 10 or 11 in which some or all of the data sent from the central control means to the scrambling unit is authenticated by the central control means by generation of a signature in accordance with a secret encryption key.

13. A scrambling system as claimed in any of claims 10, 11 or 12 comprising a plurality of scrambling units and associated central control means associated with the generation of a single transport stream.
